Europäisches Patentamt

European Patent Office

Office européen des brevets

(19)

(11)  EP 1 501 145 A1

(12)  **EUROPEAN PATENT APPLICATION**
published in accordance with Art. 158(3) EPC

(43) Date of publication:
26.01.2005 Bulletin 2005/04

(51) Int Cl.⁷: **H01M 8/04**, H01M 8/00,
H01M 8/10, G06F 1/20

(21) Application number: 03746175.3

(22) Date of filing: 15.04.2003

(86) International application number:
PCT/JP2003/004778

(87) International publication number:
WO 2003/088399 (23.10.2003 Gazette 2003/43)

(84) Designated Contracting States:
DE FR GB

(30) Priority: 15.04.2002 JP 2002112181

(71) Applicant: NEC Corporation
Minato-ku, Tokyo 108-8001 (JP)

(72) Inventors:
• YOSHITAKE, Tsutomu, c/o NEC Corporation
Tokyo 108-8001 (JP)
• NAKAMURA, Shin, c/o NEC Corporation
Tokyo 108-8001 (JP)
• KIMURA, Hidekazu, c/o NEC Corporation
Tokyo 108-8001 (JP)

• KUROSHIMA, Sadanori, c/o NEC Corporation
Tokyo 108-8001 (JP)
• SHIMAKAWA, Yuichi, c/o NEC Corporation
Tokyo 108-8001 (JP)
• MANAKO, Takashi, c/o NEC Corporation
Tokyo 108-8001 (JP)
• IMAI, Hideto, c/o NEC Corporation
Tokyo 108-8001 (JP)
• KUBO, Yoshimi, c/o NEC Corporation
Tokyo 108-8001 (JP)

(74) Representative: VOSSIUS & PARTNER
Siebertstrasse 4
81675 München (DE)

(54) **FUEL BATTERY, ELECTRIC DEVICE, PORTABLE COMPUTER, AND FUEL BATTERY DRIVE METHOD**

(57)    Electric power is supplied from a fuel cell to a portable personal computer (210) having a heat-producing section (212) which generates heat during operation. The fuel cell includes electrolyte, a fuel electrode and an oxidant electrode arranged to sandwich the electrolyte, and a fuel supply section capable of supplying fuel which has absorbed heat of the heat-producing section (212) to the fuel electrode. The fuel supply section removes the heat from the heat-producing section (212) by supplying fuel to the fuel electrode when the fuel is heated by heat exchange. Thus, it is possible to improve the battery efficiency of the fuel cell and suppress increase of the temperature of the heat-producing section.

FIG. 2

EP 1 501 145 A1

## Description

Technical Field

The present invention relates to a fuel cell, an electric device, a portable computer, and a method for driving a fuel cell.

Background Art

Electronic devices such as personal computers handle more and more increasing quantity of information and consume markedly increasing amount of electric power in the recent computerized society. Particularly, portable electronic devices consume increasing amount of electric power with increasing capacities. Such portable electronic devices generally use lithium ion cells as an electric power source. However, the energy density of the lithium ion cells has approached its theoretical limit. To use for a longer time continuously, the portable electronic device must thereby be reduced in drive frequency of CPU and in electric power consumption.

Under these circumstances, fuel cells having a high energy density and a high heat exchange effectiveness are expected to markedly prolong the continuous operation hour of the portable electronic devices by using them as the electric power source instead of lithium ion cells.

The fuel cells include a fuel electrode, an oxidant electrode and an electrolyte sandwiched between the electrodes, and generate electric power by supplying a fuel and an oxidant to the fuel electrode and the oxidant electrode, respectively. Hydrogen gas has been generally used as the fuel. In addition, methanol-reforming and direct fuel cells have been increasingly developed using methanol as a raw material. Such methanol is available at low cost and is easy to handle. In the methanol-reforming fuel cells, hydrogen is generated by reforming methanol. In the direct-methanol fuel cells, methanol is directly used as the fuel.

When hydrogen is used as the fuel, the reaction in the fuel electrode is in accordance with following Equation (1).

$$3H_2 \rightarrow 6H+ + 6e- \qquad (1)$$

When methanol is used as the fuel, the reaction in the fuel electrode is in accordance with following Equation (2).

$$CH_3OH + H_2O \rightarrow 6H+ + CO_2 + 6e- \qquad (2)$$

In any case, the reaction in the oxidant electrode is in accordance with following Equation (3).

$$3/2O_2 + 6H+ + 6e- \rightarrow 3H_2O \qquad (3)$$

Among them, the direct fuel cells can yield hydrogen ions from an aqueous methanol solution, do not require, for example, a reformer, can be reduced in size and weight and have great advantages for applying portable electronic devices. In addition, the direct-methanol fuel cells use a liquid fuel, i.e., an aqueous methanol solution and have a very high energy density.

The direct fuel cells using methanol directly as the fuel show higher battery efficiency and power density with an increasing temperature of the fuel cell main body and fuel, because the activity of the methanol oxidation reaction increases. Accordingly, the fuel or the like is preferably heated before supplying to the fuel electrode in the direct fuel cells. However, portable electronic devices are difficult to have a dedicated heater for heating the fuel or the like due to their limited usable electric power, and measures must be conventionally taken to improve their performance under conditions at room temperature or low temperatures. The reforming fuel cells must heat methanol to reform the same to thereby generate hydrogen.

The personal computers and other electronic devices consume more and more electric power with an increasing drive frequency of their CPU, which invites elevated temperature of the CPU. To solve this problem, the CPU is cooed, for example, by arranging a heatsink for dissipating the heat of the CPU and subjecting the CPU to forced air-cooling using a cooling fan. However, the air-cooling using a cooling fun produces noise. The cooling fan consumes much electric power and is not suitable for use in portable electronic devices limited in usable electric power. Cooling mechanisms must be miniaturized with a decreasing size of portable electronic devices. However, such miniaturized cooling mechanisms are difficult to yield sufficient cooling power. Accordingly, conventional portable electronic devices are not allowed to have a higher drive frequency of their CPU for reducing the heat production. Thus, a demand has been also made to provide a method for efficiently cooling a heat-producing part such as a CPU.

The present invention has been accomplished under these circumstances, and an object thereof is to improve the battery efficiency and power density of a fuel cell.

Another object of the present invention is to reduce heat production of an electric device.

Yet another object of the present invention is to reduce the size and weight of a portable electric device.

A further object of the present invention is to increase the drive frequency of a CPU of a portable personal computer.

Disclosure of Invention

The present invention provides A fuel cell for supplying electric power to an electric device including a heat-producing section which produces heat during operation, comprising an electrolyte, a fuel electrode and an oxidant electrode sandwiching the electrolyte, and a fuel-supply section being configured so as to supply a fuel absorbing the heat of the heat-producing section to the fuel electrode. The fuel-supply section is so configured as to transfer the heat of the heat-producing section to the fuel to be supplied to the fuel electrode and can supply the fuel absorbing the heat of the heat-producing section to the fuel electrode.

The fuel-supply section herein has the function of transferring the heat of the heat-producing section to the fuel and is so configured as to transfer the heat of the heat-producing section to the fuel by any means. More specifically, the fuel-supply section may be so configured as to transfer the heat of the heat-producing section to the fuel directly or via a heat-conductive material. The fuel-supply section includes, for example, a fuel tank and/or a fuel channel. In this case, the heat of the heat-producing section may be transferred to the fuel tank or to the fuel channel.

The heat producing function of the heat-producing section can be implemented by a part which produces heat when the electric device exhibits its original function. The heat of the heat-producing section can be heat of a part which overheats during operation of the electric device, or residual heat or waste heat of a part which has been heated according to another object. Thus, the fuel of the fuel cell can be heated without providing, for example, a dedicated heater for heating the fuel. The battery efficiency and power density of the fuel cell can be improved without consuming extra electric power.

The present invention further provides a fuel cell for supplying electric power to an electric device including a heat-producing section which produces heat during operation, comprising an electrolyte, a fuel electrode and an oxidant electrode sandwiching the electrolyte and a fuel-supply section being so configured as to remove the heat of the heat-producing section by the action of a fuel to be supplied to the fuel electrode.

The heat-producing section may be a part which overheats during operation of the electric device. The heat-producing section can thereby be cooled by the action of the fuel of the fuel cell. Thus, the electric device does not require an extra cooling mechanism, consumes less electric power and can be reduced in weight and size.

The fuel may be one that is liquid at ordinary temperature and may be either of a fuel for a direct fuel cell which is directly supplied to the fuel electrode or a raw material fuel for a reforming fuel cell before reforming. In the reforming fuel cell, the raw material fuel is reformed before use.

The fuel cell may be a direct fuel cell in which the fuel is directly supplied to the fuel electrode. The battery efficiency and power density of the direct fuel cell can be increased by heating the fuel. The fuel cell may also be of a polyelectrolyte type in which a polymer membrane is used as a solid electrolyte membrane.

The fuel-supply section may include a flow-rate-control section for controlling the flow rate of the fuel to be supplied to the fuel electrode according to the heat production level of the heat-producing section. The fuel-supply section may further include a temperature sensor for detecting the heat production level of the heat-producing section. The heat production level herein may be indicated by the temperature of the heat-producing section itself or the temperature of the fuel absorbing the heat of the heat-producing section. The flow-rate-control section may comprise a delivery pump such as a piezoelectric element.

The present invention further provides an electric device having a fuel cell as an electric power source and comprising the fuel cell and a heat-producing section which produces heat during operation of the electric device, the fuel cell comprising an electrolyte, and a fuel electrode and an oxidant electrode sandwiching the electrolyte, wherein the fuel cell further comprises a fuel-supply section being so configured as to supply a fuel absorbing the heat of the heat-producing section to the fuel electrode.

The present invention also provides an electric device having a fuel cell as an electric power source and comprising the fuel cell and a heat-producing section which produces heat during operation of the electric device, the fuel cell comprising an electrolyte, and a fuel electrode and an oxidant electrode sandwiching the electrolyte, wherein the fuel cell further comprises a fuel-supply section being so configured as to remove the heat of the heat-producing section by the action of a fuel to be supplied to the fuel electrode.

The electric device may further comprise a heat-dissipating section, and the fuel-supply section may further comprise a fuel channel arranged in the heat-dissipating section. The heat-dissipating section is a component for aiding heat dissipation of the heat-producing section. The heat-dissipating section may comprise, for example, a metal having a multiplicity of radiating fins.

The heat-producing section may be a CPU, and the fuel-supply section may be so configured as to transfer the heat of the CPU to the fuel. By this configuration, the heat of the CPU can be absorbed by the fuel of the fuel cell, thereby the CPU can be efficiently cooled and the fuel cell can have increased battery efficiency and power density.

The electric device may further comprise a display, and the fuel cell may be arranged on the back of the display. The display herein may include a backlight. In this case, the fuel cell is heated by the heat of the backlight of the display, and, thus, the fuel cell can have a further increased battery efficiency. The fuel electrode in the fuel cell is preferably arranged adjacent to the display. Thus, the air serving as an oxidant can be stably supplied to the oxidant electrode. The electric device may be portable. The electric device of the present invention having this configuration has an increased output efficiency of the electric power source and can have a prolonged continuous operation hour even when the electric device is portable.

The present invention further provides a portable computer having a fuel cell as an electric power source and comprising a first cabinet having a keyboard section on its surface and holding an electronic circuit including a CPU, and a second cabinet being pivotally mounted to the first cabinet and including a display being arranged so as to face the keyboard section, wherein the fuel cell comprises an electrolyte, a fuel electrode and an oxidant electrode being arranged so as to sandwich the electrolyte, and a fuel-supply section being so configured as to supply a fuel absorbing the heat of the CPU to the fuel electrode.

The present invention also provides a portable computer having a fuel cell as an electric power source and comprising a first cabinet having a keyboard section on its surface and holding an electronic circuit including a CPU, and a second cabinet being pivotally mounted to the first cabinet and including a display being arranged so as to face the keyboard section, wherein the fuel cell comprises an electrolyte, a fuel electrode and an oxidant electrode being arranged so as to sandwich the electrolyte, and a fuel-supply section being so configured as to remove the heat of the CPU by the action of a fuel to be supplied to the fuel electrode.

The portable computer may further include a heat-dissipating section being so configured as to dissipate the heat of the CPU, and the fuel-supply section may include a fuel channel arranged in the heat-dissipating section.

The portable computer may further include a fuel tank for holding the fuel, and the fuel tank may be arranged at such a position as to absorb the heat of the CPU.

The present invention further provides a method for driving a fuel cell, comprising the step of cooling a heat-producing section of an electric device with a fuel, the electric device having a fuel cell as an electric power source, and the fuel being supplied to the fuel cell.

The present invention also provides a method for driving a fuel cell, comprising the step of cooing an overheating heat-producing section of an electric device with a fuel, the electric device having a fuel cell as an electric power source, and the fuel being supplied to the fuel cell.

The present invention further provides a method for driving a fuel cell for supplying electric power to an electric device, comprising the step of supplying a fuel to the fuel cell, the fuel absorbing heat of a heat-producing section which produces heat during operation of the electric device.

The present invention also provides a method for driving a fuel cell for supplying electric power to an electric device, comprising the steps of allowing a fuel to be supplied to the fuel cell to absorb heat of a heat-producing section which produces heat during operation of the electric device to thereby remove the heat of the heat-producing section, and subsequently supplying the fuel to the fuel cell.

Brief Description of the Drawings

Fig. 1 is a schematic sectional view showing a single cell structure of a fuel cell main body in an embodiment of the present invention.
Fig. 2 is a block diagram showing an example of an electric device according to an embodiment of the present invention.
Figs. 3A and 3B are perspective views of a portable personal computer according to the embodiment when viewed from different angles.
Fig. 4 is a perspective view showing the detailed structure of a CPU section in the embodiment.

Best Mode for Carrying Out the Invention

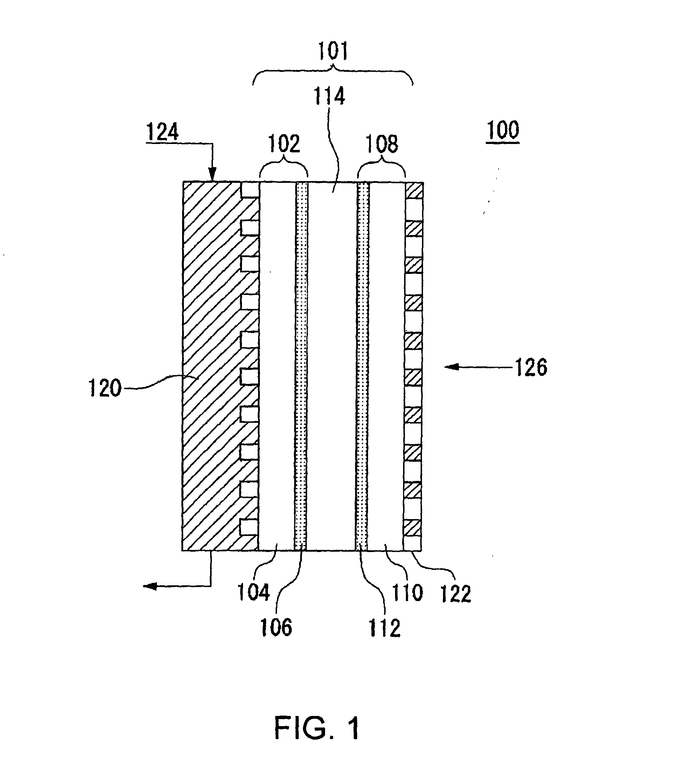

Fig. 1 is a schematic sectional view showing a single cell structure of a fuel cell main body in an embodiment of the present invention. The fuel cell main body 100 includes a plurality of single cell structures 101. Each of the single cell structures 101 comprises a fuel electrode 102, an oxidant electrode 108 and a solid electrolyte membrane 114. The solid electrolyte membrane 114 serves to separate the fuel electrode 102 from the oxidant electrode 108 and transfer hydrogen ions therebetween. Thus, the solid electrolyte membrane 114 is preferably a membrane that can highly transmit hydrogen ions, is chemically stable and has high mechanical strength.

The material for the solid electrolyte membrane 114 is preferably an organic polymer having a polar group. Examples of the polar group are strong acid radicals such as sulfone group and phosphate group, and weak acid radicals such as carboxyl group. Examples of such organic polymers are aromatic fused polymers such as sulfonated poly(4-phenoxybenzoyl-1,4-phenylene) and alkylsulfonated polybenzimidazole; sulfone-containing perfluorocarbons (Nafion (product of Du Pont; registered trademark), Aciplex (product of Asahi Kasei Corporation)); and carboxyl-containing perfluorocarbons (Flemion S Membrane (product of Asahi Glass Co., Ltd.; registered trademark)).

The fuel electrode 102 and the oxidant electrode 108 comprise a fuel-electrode catalyst layer 106 and an oxidant-electrode catalyst layer 112 being arranged on substrates 104 and 110, respectively, and each containing catalyst-bearing carbon particles and fine solid-electrolyte particles. The surfaces of the substrates 104 and 110 may have been subjected to water-repellent treatment.

Examples of the catalyst for the fuel-electrode catalyst layer 106 are platinum, gold, silver, ruthenium, rhodium, palladium, osmium, iridium, cobalt, nickel, rhenium, lithium, lanthanum, strontium, yttrium, and alloys of these metals. The catalyst for the oxidant-electrode catalyst layer 112 can be the same as the fuel-electrode catalyst layer 106, and the above-exemplified substances can be used. The catalysts for the fuel-electrode catalyst layer 106 and the oxidant-electrode catalyst layer 112 may be the same as or different from each other.

Examples of the carbon particles for bearing the catalyst are acetylene black (e.g., Denka Black (product of Denkikagaku Kogyo Inc.; registered trademark), XC 72 (product of Vulcan)), Ketjenblack, carbon nanotubes and carbon nanohorns. The particle diameter of the carbon particles is set at, for example, 0.01 to 0.1 μm, and preferably 0.02 to 0.06 μm.

The fine solid-electrolyte particles in the fuel-electrode catalyst layer 106 and the oxidant-electrode catalyst layer 112 may be the same as or different from each other. The fine solid-electrolyte particles can comprise a material the same as or different from the solid electrolyte membrane 114, and such materials can be used in combination.

The substrates 104 and 110 in the fuel electrode 102 and the oxidant electrode 108 may be a porous substrate such as carbon paper, carbonaceous molded article, carbonaceous sintered article, sintered metal or foamed metal. A water-repellent agent such as polytetrafluoroethylene can be used for the water-repellent treatment of the substrates 104 and 110.

The preparation process of the fuel cell main body 100 is not specifically limited in the present invention and may be, for example, the following process.

Initially, the catalyst is applied to the carbon particles according to a general impregnation procedure. Next, the catalyst-bearing carbon particles and fine solid-electrolyte particles are dispersed in a medium to form a paste. The paste is then applied to and dried thereon the substrate 104 or 110 which has been subjected to water-repellent treatment to thereby yield the fuel electrode 102 and the oxidant electrode 108.

The particle diameters of the carbon particles and the fine solid-electrolyte particles are set, for example, at 0.01 to 0.1 μm and 0.05 to 1 μm, respectively. The weight ratio of the carbon particles to the fine solid-electrolyte particles is set, for example, at 2:1 to 40:1. The weight ratio of water to the solute in the paste is set, for example, at about 1:2 to about 10:1. The particle diameter of the catalyst particles is set, for example, at 1 nm to 10 nm. The paste can be applied to the substrate 104 or 110 according to any procedure not specifically limited, such as blush coating, spray coating or screen printing. The paste is applied to a thickness of about 1 μm to about 2 mm. After applying the paste, the substrate is heated at a set temperature for a set time according to the material used and thereby yields the fuel electrode 102 and the oxidant electrode 108. The heating temperature and time are appropriately selected according to the material used, and the substrate may be heated at a temperature of 100°C to 250°C for 30 seconds to 30 minutes.

The solid electrolyte membrane 114 in the present invention can be prepared by an appropriate process selected according to the material used. For example, the solid electrolyte membrane 114 of an organic polymer material can be prepared by dissolving or dispersing the organic polymer material in a solvent, casting the resulting liquid onto a releasable sheet such as of polytetrafluoroethylene and drying the cast film.

The above-prepared solid electrolyte membrane 114 is sandwiched and hot-pressed between the fuel electrode 102 and the oxidant electrode 108 to thereby yield the single cell structure 101. In this procedure, the fuel-electrode catalyst layer 106 and the oxidant-electrode catalyst layer 112 are brought into contact with the solid electrolyte membrane 114. The conditions for hot-pressing are selected according to the material. When the fine solid-electrolyte particles in the fuel-electrode catalyst layer 106 and the oxidant-electrode catalyst layer 112 comprise an organic polymer, hot-pressing may be carried out at a temperature exceeding the softening temperature or glass transition temperature of the organic polymer. More specifically, hot-pressing is carried out at a temperature of 100°C to 250°C, a pressure of 1 to 100 kg/cm2 for 10 seconds to 300 seconds.

The single cell structures 101 are arranged in a plane and are connected in series or parallel to yield the fuel cell main body 100. Alternatively, the single cell structure 101 is sandwiched between a fuel-electrode end plate 120 and an oxidant-electrode end plate 122, and a plurality of the resulting article are stacked to yield a stacked structure in which plural single cell structures 101 are connected in series. In this case, the fuel cell main body 100 is produced by connecting the plural stacked structures in parallel.

In the fuel cell main body 100 having the above configuration, a fuel 124 is supplied via the fuel-electrode end plate 120 to the fuel electrode 102 of each single cell structure 101. An oxidant 126 is supplied via the oxidant-electrode end plate 122 to the oxidant electrode 108 of each single cell structure 101.

The fuel 124 may be an organic liquid fuel including an alcohol such as methanol, ethanol or dimethyl ether, or a liquid hydrocarbon such as cycloparaffin. The organic liquid fuel can be used as an aqueous solution. As the oxidant 126, the air is generally used, but oxygen gas may also be used.

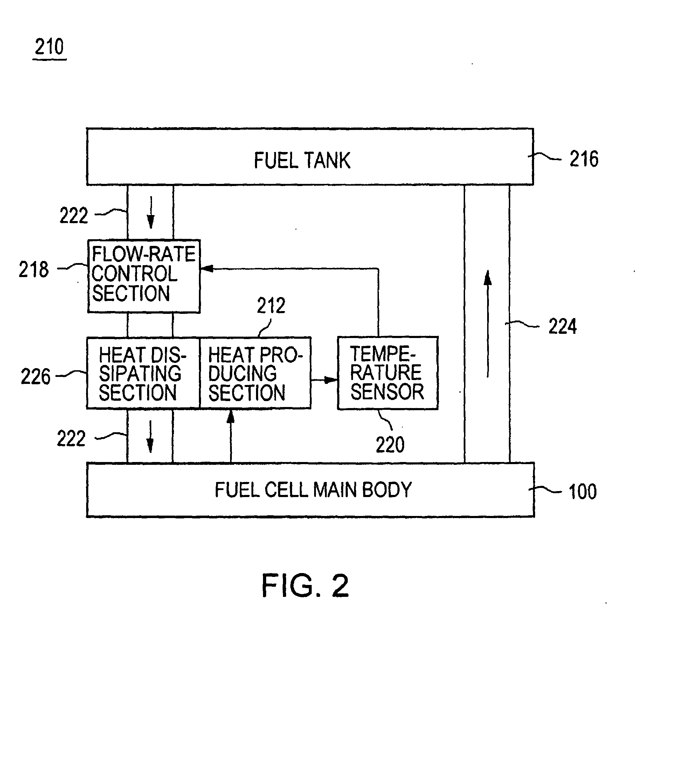

Fig. 2 is a block diagram showing an example of an electric device according to an embodiment of the present invention.

The electric device according to this embodiment is a portable personal computer. The portable personal computer 210 includes a heat-producing section 212, a heat-dissipating section 226 and a fuel cell serving as an electric power source. The heat-producing section 212 produces heat during operation of the portable personal computer 210. The heat-dissipating section 226 is so configured as to dissipate the heat from the heat-producing section 212. The fuel cell in this embodiment comprises the above-mentioned fuel cell main body 100, and a fuel-supply section. The fuel-supply section supplies a fuel absorbing the heat of the heat-producing section 212 to the fuel electrode 102 (Fig. 1) of each single cell structure 101 (Fig. 1) of the fuel cell main body 100. The fuel-supply section includes a fuel tank 216, a flow-rate control section 218, a temperature sensor 220, a fuel supply piping 222 and a fuel recovery piping 224. The fuel tank 216 holds the fuel. The flow-rate control section 218 controls the flow rate of the fuel to be supplied to the fuel electrode 102 (Fig. 1). The temperature sensor 220 detects the heat production level of the heat-producing section 212. The heat-dissipating section 226 includes a fuel channel.

The above-mentioned fuel cell main body 100, the fuel tank 216 and the pipings 222 and 224 associated therewith constitute a fuel cell system.

Examples of the heat-producing section 212 are CPUs, hard disks, power supply modules, memories, displays and peripheral devices. In particular, overheat of CPU must be avoided. Accordingly, the CPU can be efficiently cooled and the fuel is heated more effectively by cooling the CPU with the fuel to be supplied to the fuel cell main body 100.

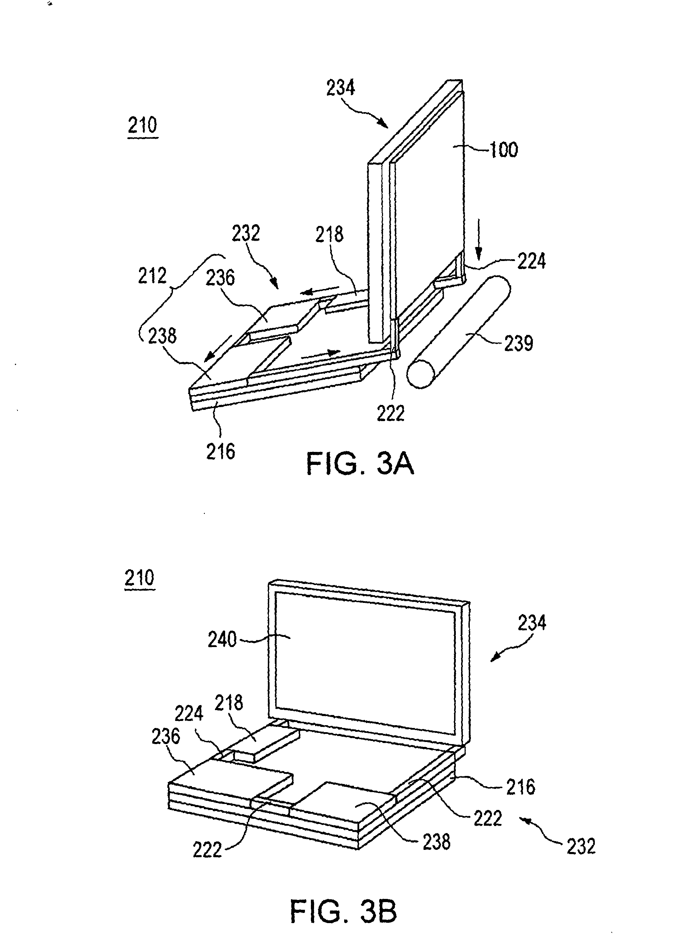

Figs. 3A and 3B are perspective views of a portable personal computer according to this embodiment when viewed from different angles. The portable personal computer 210 includes a first cabinet 232 which may have, for example, a keyboard, and a second cabinet 234 which may have, for example, a display. For the sake of explanation, the portable personal computer is illustrated in which operation parts such as keyboard are detached. The second cabinet 234 is pivotably mounted to the first cabinet 232. The portable personal computer 210 comprises a support member 239 for supporting the main body.

The portable personal computer 210 includes, for example, a CPU 236 and a hard disk 238. Once the portable personal computer is operated, the CPU 236 and the hard disk 238 produce heat. The fuel-supply section remove the heat of the CPU 236 and the hard disk 238 as the heat-producing section 212 by the action of the fuel.

The fuel cell main body 100 in this embodiment is arranged on the back of a display 240. The display 240 is not limited to a liquid crystal display. However, when the display is a liquid crystal display with backlighting, the heat production of the backlight also raise the temperature of the fuel cell main body 100, and the output can be further increased. Thus, the heat of the display 240 is removed, and the portable personal computer can be operated stably. The fuel cell main body 100 may also be arranged in the vicinity of the heat-producing section 212 such as the CPU 236 as another embodiment.

The fuel tank 216 is arranged on the back of the keyboard, namely, on the back of a face on which the heat-producing section 212 such as the CPU 236 and/or the hard disk 238 is mounted. Thus, the fuel tank 216 is also heated by the heat of the heat-producing section 212, and the heating of the fuel and removing of the heat of the heat-producing section 212 can be more efficiently performed.

The flow-rate control section 218 may be, for example, a delivery pump. The flow rate of the fuel to be supplied to the fuel cell main body 100 is relatively as small as about 10 cc/min or less. Thus, the delivery pump can be a piezoelectric element such as a miniaturized piezoelectric motor. Such a piezoelectric element consumes very low electric power. Accordingly, the heat-producing section 212 can be more efficiently cooled with lower energy consumption than the conventional process of cooling with a cooling fan. In addition, the cooling mechanism does not use a fan and thereby does not produce noise.

The temperature sensor 220 shown in Fig. 2 is, for example, a thermistor. The flow-rate control section 218 controls the flow rate of the fuel, for example, according to a PID system depending on the temperature of the heat-producing section 212 such as the CPU 236. Thus, the fuel at a preferred temperature is supplied to the fuel cell main body 100. The preferred temperature of the fuel to be supplied to the fuel cell main body 100 is 30°C to 100°C.

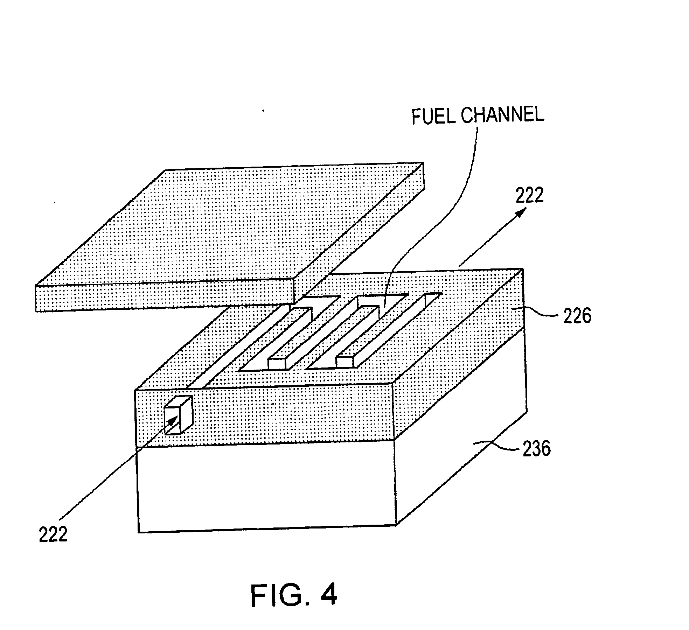

Fig. 4 is a perspective view showing the detailed structure of the CPU section in this embodiment. The heat-dissipating section 226 is, for example, a heatsink. A fuel channel is arranged in meandering manner in the heat-dissipating section 226. Thus, heat can be more efficiently exchanged between the CPU 236 and the fuel. The channel in the heat-dissipating section 226 may comprise an aluminum pipe. When the heat-dissipating section 226 is, for example, an aluminum heatsink, the channel in the heat-dissipating section 226 can be formed integrally with the heat-dissipating section 226. When the heat-dissipating section 226 and the channel therein are made of aluminum, the portion to be in contact with the fuel, such as the inside of the aluminum pipe, can be made of a material that is resistant to corrosion by the fuel, such as gold plating.

Next, the operation for supplying electric power to the portable personal computer 210 by the fuel cell will be described with reference to Figs. 1 to 4. The fuel held in the fuel tank 216 is supplied via the fuel supply piping 222 to the heat-dissipating section 226 which is connected to the heat-producing section 212 such as the CPU 236 and the hard disk 238. The heat of the heat-producing section 212 is absorbed by the fuel during the course of passing through the fuel channel in the heat-dissipating section 226. Thus, the heat-producing section 212 is efficiently cooled and the fuel is heated. After absorbing the heat from the heat-producing section 212, the fuel is supplied via the fuel supply piping 222 to the fuel electrode 102 of each single cell structure 101 in the fuel cell main body 100. The oxidant electrode 108 of each single cell structure 101 in the fuel cell main body 100 takes oxygen in the air therein to thereby generate electric power. The fuel not used in the fuel cell main body 100 is returned via the fuel recovery piping 224 to the fuel tank 216.

According to this embodiment, the heat-producing section 212 such as the CPU 236 can be efficiently cooled, and the output of the fuel cell can be increased by using the waste heat thereof. Thus, problems which inhibit the application of a CPU with high drive frequency to a conventional portable personal computer can be solved at once, and even a portable personal computer can use a CPU with high drive frequency.

The fuel cell of the present invention will be illustrated in further detail with reference to several examples below, which are not intended to limit the scope of the present invention.

EXAMPLE 1

A fuel cell main body was prepared in the following manner. Nafion 117 (product of Du Pont) was used as the solid electrolyte membrane 114 shown in Fig. 1. Denka Black (product of Denkikagaku Kogyo Inc.), a platinum-ruthenium alloy, and a 5% Nafion solution in alcohol (product of Aldrich Chemical) were used as the carbon particles, the catalyst and the fine solid-electrolyte particles in the fuel electrode and the oxidant electrode, respectively. Carbon Paper (product of Toray Industries, Inc.; TGP-H-120) was used as the substrate both in the fuel electrode and the oxidant electrode.

Initially, Denka Black bearing the catalyst was mixed with the 5% Nafion solution in alcohol, was dispersed in an ultrasonic disperser at 50°C for about three hours and thereby yielded a paste. The Nafion 117 sample paste as the solid electrolyte membrane 114 was applied to Carbon Paper by screen printing, was dried at 100°C and thereby yielded a fuel electrode and an oxidant electrode. These fuel electrode and oxidant electrode were hot-pressed onto the both sides of Nafion 117 and thereby yielded a single cell structure. The areas of the fuel electrode and oxidant electrode were set at 6 cm$^2$, respectively. A 20% aqueous methanol solution as the fuel and the air were supplied to the fuel electrode and the oxidant electrode of the single cell structure, respectively, thus yielding an output voltage of 0.42 V at an electric current of 600 mA.

A plurality of the above-prepared single cell structure were connected in a plane in series and parallel and thereby yielded a fuel cell main body 25 cm wide, 18 cm long and 0.7 cm thick. A 10% aqueous methanol solution was charged into a fuel tank 25 cm wide, 5 cm long and 1.5 cm high.

The fuel cell main body and fuel tank were aligned on the back of a keyboard of a portable personal computer. The fuel cell main body was arranged so that the oxidant electrode of the fuel cell was on the downside of the fuel cell main body, namely, on the side opposite to the portable personal computer. A space (clearance) of about 3 mm was arranged under the portable personal computer. The portable personal computer was so configured that the aqueous methanol solution passes though the heat-dissipating section of the CPU. The aqueous methanol solution was supplied to the fuel electrode of the fuel cell main body at a flow rate of 1 to 2 cc/min. Temperature sensors were arranged in the fuel supply piping 222 in the vicinity of the fuel cell main body and on the surface of the CPU. The temperature sensors work to measure the temperature of the aqueous methanol solution immediately before reaching the fuel cell main body and the surface temperature of the CPU.

When the portable personal computer was not operated, namely, the CPU was at a standstill, the temperature of the aqueous methanol solution immediately before reaching the fuel cell main body was about 20°C (room temperature). When the aqueous methanol solution was supplied while the portable personal computer and its CPU were operated, the temperature gradually increased and reached about 50°C 30 minutes after the actuation. The surface temperature of the CPU could be held to about 60°C. This configuration avoids noise even when the aqueous methanol solution was supplied, since the delivery pump is of small size and does not significantly produce noise as compared with the case where a fan is used. In contrast, the surface temperature of the CPU rose to about 80°C when the aqueous methanol solution was not supplied during operation of the CPU.

Next, the output of the fuel cell main body 100 was determined and was found to be 15 W when the CPU was not operated. The output increased when the CPU was actuated, and became stable at about 23 W 10 minutes later.

As is described above, the portable personal computer according to this example uses a liquid fuel for the fuel cell for cooling its heat-producing section, especially its CPU, and then supplies the fuel to the fuel electrode of the fuel cell main body. Thus, the temperature rise in the heat-producing section can be efficiently suppressed, and the output of the fuel cell as the electric power source can be increased.

EXAMPLE 2

Single cell structures were prepared by the procedure of Example 1. A plurality of the above-prepared single cell structures were connected in a plane in series and parallel and thereby yielded a fuel cell main body 26 cm wide, 20 cm long and 0.6 cm thick. A 15% aqueous methanol solution was charged into a fuel tank 25 cm wide, 6 cm long and 2 cm high.

The fuel tank was arranged in a lower part of a portable personal computer, and the fuel cell main body was arranged on the back of a liquid crystal display so that the oxidant electrode of the fuel cell was on the top of the fuel cell main body, namely, on the opposite side to the liquid crystal display. In this configuration, the oxidant electrode can take the air therein. The portable personal computer was so configured that the aqueous methanol solution passes through the heat-dissipating section of the CPU. The aqueous methanol solution was supplied to the fuel electrode of the fuel cell main body at a flow rate of 1 to 2 cc/min.

The temperature of the aqueous methanol solution immediately before reaching the fuel cell main body was about 20°C (room temperature) when the portable personal computer was not operated, and gradually increased and reached about 50°C after 30 minutes when the aqueous methanol solution was allowed to pass during operation of the portable device. The surface temperature of the CPU could be held to about 60°C.

Next, the output of the fuel cell main body was determined and was found to be about 18 W when the backlight of the liquid crystal display was not used and the CPU was not operated. The output increased and became stable at about 26 W 10 minutes after the actuation of the CPU, and further increased and reached about 30 W 10 minutes after actuation of the CPU and the backlight of the liquid crystal display. In this procedure, the temperature of the fuel cell main body stood at 50°C or higher.

The portable personal computer according to this embodiment uses the liquid fuel for fuel cell for cooling its heat-producing section, in particular, its CPU, then supplies the fuel to the fuel electrode of the fuel cell main body, and further heats the fuel cell main body by the heat of the backlight of the liquid crystal display. Thus, the fuel cell as the electric power supply can produce a further increased output. In addition, the fuel cell main body is arranged on the top of the portable personal computer, and the air can be easily taken in the oxidant electrode.

The present invention has been illustrated above based on the examples. However, these examples are shown only by illustration, and one skilled in the art can understand that various modifications in individual components and treating processes are possible and that such modifications are also within the scope of the present invention. Such examples will be illustrated below.

In the above embodiments, the electric device is illustrated by taking a portable personal computer as an example but may be a portable electronic device such as PDA or mobile phone or a desktop electronic device such as a desktop personal computer. This is because these electronic devices also have a CPU, the fuel of the fuel cell can be used for cooling the CPU, and the performance of the fuel cell can be increased by heating the fuel with the CPU. Further, the electric device can be an electric product such as cleaner or smoothing iron, because such electric products also have a heat-producing section such as a power supply unit, and the performance of the fuel cell can be increased by heating the fuel with the heat-producing section.

A direct fuel cell has been illustrated as an example in the embodiments. In the direct fuel cell, an organic liquid fuel such as methanol is directly supplied to the fuel electrode. However, the heat of a component inherently provided in an electric device can also be used as heating means for reforming an organic liquid fuel in a reforming fuel cell using, for example, a reformer. In addition, the heat of an overheating component such as a CPU can be removed by using an organic liquid fuel before reforming.

According to the present invention described above, the heat-producing section can be efficiently cooled and the output of the fuel cell can be increased by heat exchange between the heat-producing section of the electric device and the fuel to be supplied to the fuel cell in the case where the fuel cell supplies electric power to the electric device. Thus, a small-sized fuel cell with high power can be provided. In particular, the present invention can solve conventional problems in portable computers, namely, electric power deficit and overheat of the CPU concurrently, and the resulting portable computers can employ a CPU with high drive frequency.

Industrial Applicability

The present invention can be simply applied to an electric device such as a portable computer, can increase the battery efficiency of a fuel cell, suppress the temperature increase of the electric device and thereby enable the electric device to operate at high speed for a long time. The present invention can also be applied to other devices in addition to such portable electric devices.

**Claims**

1. A fuel cell for supplying electric power to an electric device including a heat-producing section which produces heat during operation, comprising:

    an electrolyte;
    a fuel electrode and an oxidant electrode sandwiching the electrolyte; and
    a fuel-supply section being configured so as to supply a fuel absorbing the heat of the heat-producing section to the fuel electrode.

2. A fuel cell for supplying electric power to an electric device including a heat-producing section which produces heat during operation, comprising:

an electrolyte;
a fuel electrode and an oxidant electrode sandwiching the electrolyte; and
a fuel-supply section being so configured as to remove the heat of the heat-producing section by the action of a fuel to be supplied to the fuel electrode.

3. The fuel cell according to claim 1 or 2, wherein the fuel is liquid at ordinary temperature.

4. The fuel cell according to any one of claims 1 to 3, which is a direct fuel cell in which the fuel is directly supplied to the fuel electrode.

5. The fuel cell according to any one of claims 1 to 4, wherein the fuel-supply section comprises a flow-rate-control section for controlling the flow rate of the fuel to be supplied to the fuel electrode according to the heat production level of the heat-producing section.

6. An electric device using a fuel cell as an electric power source and comprising:

the fuel cell and a heat-producing section which produces heat during operation of the electric device, the fuel cell comprising an electrolyte, and a fuel electrode and an oxidant electrode sandwiching the electrolyte,

wherein the fuel cell further comprises a fuel-supply section being so configured as to supply a fuel absorbing the heat of the heat-producing section to the fuel electrode.

7. An electric device using a fuel cell as an electric power source and comprising:

the fuel cell and a heat-producing section which produces heat during operation of the electric device, the fuel cell comprising an electrolyte, and a fuel electrode and an oxidant electrode sandwiching the electrolyte,

wherein the fuel cell further comprises a fuel-supply section being so configured as to remove the heat of the heat-producing section by the action of a fuel to be supplied to the fuel electrode.

8. The electric device according to claim 6 or 7, further comprising a heat-dissipating section being so configured as to dissipate the heat of the heat-producing section,

wherein the fuel-supply section comprises a channel for the fuel being arranged in the heat-dissipating section.

9. The electric device according to any one of claims 6 to 8,

wherein the heat-producing section is a CPU, and

wherein the fuel-supply section is so configured as to transfer the heat of the CPU to the fuel.

10. The electric device according to any one of 6 to 9, further comprising a display,

wherein the fuel electrode is arranged on the back of the display.

11. The electric device according to any one of claims 6 to 10, which is portable.

12. A portable computer having a fuel cell as an electric power source and comprising:

a first cabinet having a keyboard section on its surface and holding an electronic circuit including a CPU; and
a second cabinet being pivotally mounted to the first cabinet and including a display being arranged so as to face the keyboard section,

wherein the fuel cell comprises an electrolyte; a fuel electrode and an oxidant electrode sandwiching the electrolyte; and a fuel-supply section being so configured as to supply a fuel absorbing the heat of the CPU to the fuel electrode.

13. A portable computer having a fuel cell as an electric power source and comprising:

a first cabinet having a keyboard section on its surface and holding an electronic circuit including a CPU; and
a second cabinet being pivotally mounted to the first cabinet and including a display being arranged so as to face the keyboard section,

wherein the fuel cell comprises an electrolyte; a fuel electrode and an oxidant electrode sandwiching the electrolyte; and a fuel-supply section being so configured as to remove the heat of the CPU by the action of a fuel to be supplied to the fuel electrode.

14. The portable computer according to claim 12 or 13, further comprising a heat-dissipating section being so configured as to dissipate the heat of the CPU, wherein the fuel-supply section includes a channel for the fuel being arranged in the heat-dissipating section.

**15.** The portable computer according to any one of claims 12 to 14, further comprising a fuel tank for holding the fuel, wherein the fuel tank is arranged at such a position as to absorb the heat of the CPU.

**16.** A method for driving a fuel cell, comprising the step of cooling a heat-producing section of an electric device with a fuel, the electric device having a fuel cell as an electric power source, and the fuel being supplied to the fuel cell.

**17.** A method for driving a fuel cell, comprising the step of cooing an overheating heat-producing section of an electric device with a fuel, the electric device having a fuel cell as an electric power source, and the fuel being supplied to the fuel cell.

**18.** A method for driving a fuel cell for supplying electric power to an electric device, comprising the step of supplying a fuel to the fuel cell, the fuel absorbing heat of a heat-producing section which produces heat during operation of the electric device.

**19.** A method for driving a fuel cell for supplying electric power to an electric device, comprising the steps of allowing a fuel to be supplied to the fuel cell to absorb heat of a heat-producing section which produces heat during operation of the electric device to thereby remove the heat of the heat-producing section, and subsequently supplying the fuel to the fuel cell.

**20.** A fuel cell system comprising a fuel cell main body and a fuel tank for supplying a fuel to the fuel cell main body, wherein at least one of the fuel cell main body and the fuel tank is being so configured as to come into contact with a heat-producing member which produces heat.

FIG. 1

210

| FUEL TANK | ~ 216 |

222

218 — FLOW-RATE CONTROL SECTION

212

226 — HEAT DIS-SIPATING SECTION | HEAT PRO-DUCING SECTION | TEMPE-RATURE SENSOR

224

222

220

| FUEL CELL MAIN BODY | ~ 100 |

FIG. 2

FIG. 3A

FIG. 3B

FUEL CHANNEL

222

226

236

222

FIG. 4

## INTERNATIONAL SEARCH REPORT

| International application No. |
| --- |
| PCT/JP03/04778 |

### A. CLASSIFICATION OF SUBJECT MATTER
Int.Cl$^7$  H01M8/04, 8/00, 8/10, G06F1/20

According to International Patent Classification (IPC) or to both national classification and IPC

### B. FIELDS SEARCHED

Minimum documentation searched (classification system followed by classification symbols)
Int.Cl$^7$  H01M8/04, 8/00, 8/10, G06F1/20

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br><br>A<br><br><br><br>A | JP 9-213359 A  (Matsushita Electric Industrial Co., Ltd.),<br>15 August, 1997 (15.08.97),<br>Full text; particularly, Par. Nos. [0016] to [0017]<br>& EP 788172 A1          & US 6057051 A | 1-4,6-7,9,<br>11-13,15-20<br>5,8,10,14<br><br><br>1-20 |
| A | JP 2002-49440 A  (Toshiba Corp.),<br>15 February, 2002 (15.02.02),<br>& US 2002/0055029 A1 | |
| A | JP 1-320775 A  (Tokyo Gas Co., Ltd.),<br>26 December, 1989 (26.12.89),<br>(Family: none) | 1-20 |

☐ Further documents are listed in the continuation of Box C.　　☐ See patent family annex.

| | |
| --- | --- |
| *　　Special categories of cited documents:<br>"A"　document defining the general state of the art which is not considered to be of particular relevance<br>"E"　earlier document but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
| --- | --- |
| 16 July, 2003 (16.07.03) | 12 August, 2003 (12.08.03) |

| Name and mailing address of the ISA/<br>　Japanese Patent Office | Authorized officer |
| --- | --- |
| Facsimile No. | Telephone No. |

Form PCT/ISA/210 (second sheet) (July 1998)

**INTERNATIONAL SEARCH REPORT**

| International application No. |
|---|
| PCT/JP03/04778 |

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2002-50385 A  (Honda Motor Co., Ltd.), 15 February, 2002 (15.02.02), (Family: none) | 1-20 |
| P,X | JP 2002-231290 A  (Toyota Central Research And Development Laboratories, Inc.), | 1-4,6-7, 9-13,15-20 |
| P,A | 16 August, 2002 (16.08.02), Full text (Family: none) | 5,8,14 |

Form PCT/ISA/210 (continuation of second sheet) (July 1998)